# EUROPEAN PATENT SPECIFICATION

(11) **EP 4 505 919 B1**
(45) Date of publication and mention of the grant of the patent: **12.08.2026**
(21) Application number: 24220526.8
(22) Date of filing: 05.05.2023
(51) Int. Cl.: A47J 31/44, A47J 31/46, A47J 31/60

(54) **A MILK TEXTURING AND DISPENSING ASSEMBLY**
MILCHTEXTURIERUNGS- UND -ABGABEANORDNUNG
ENSEMBLE DE TEXTURATION ET DE DISTRIBUTION DE LAIT

(30) Priority: 05.05.2022 AU 2022901196
(43) Date of publication of application: 12.02.2025
(62) Document number(s) of the earlier application(s) in accordance with Art. 76 EPC: 23171839.6 / 4 272 609
(73) Proprietor: Streben Pty Ltd, Gumdale, QLD 4154 (AU); Bolwell, Felicity, Mudgerraba, QLD 4213 (AU)
(72) Inventor: Conis, Jason Paul, Gumdale QLD 4154 (AU)
(74) Representative: Papula Oy

(56) References cited:
- EP-A1- 2 294 952
- EP-A1- 3 064 104
- EP-B1- 2 628 421
- DE-A1- 102004 050 365

## Description

### TECHNICAL FIELD

The present invention relates to an apparatus for texturing and dispensing milk, for example for the purpose of making a white coffee.

### BACKGROUND

Any references to methods, apparatus or documents of the prior art are not to be taken as constituting any evidence or admission that they formed, or form part of the common general knowledge.

A barista is a person who is specially trained in the making and serving of coffee drinks, as in a cafe or other hospitality-based enterprise. Many coffee drinks, such as Cafe Latte and Cappuccino, include a large proportion of milk that must be heated and specially textured. In the course of a busy day a barista will make many cups of coffee that require specially textured milk. The milk that is used for such drinks is typically produced by an espresso machine which dispenses steam through a wand that the barista applies to a jug of milk. The steam froths and heats the milk under the control of the barista.

There can be a considerable degree of variability between the jugs of milk that are produced depending on the skill and diligence of the various baristas.

EP 3 064 104 A1 describes a method and an apparatus for preparing and dispensing cold and hot milk comprising an automatic washing system of the ducts after a milk dispensing step, wherein the method comprises, if it was cold milk that was dispensed, carrying out a first washing cycle that comprises carrying out a first washing step of the outlet duct and the dispensing outlet with cold water, and, if it was hot milk that was dispensed, carrying out a second washing cycle that comprises carrying out a first washing step of the outlet duct and the dispensing outlet with heated water.

EP 2 294 952 A1 describes a device for dispensing milk and / or milk foam from a container containing milk comprises a removal line which is connected to an emulsifying device via a first line. With this device, cold milk, warm milk, cold milk foam and warm milk froth can be dispensed in an optimal way and in the desired consistency.

DE 10 2004 050365 A1 describes a beverage maker, wherein for the preparation of a drink water an aromatics exchanger and the drinks therefrom an outlet on a support surface for a collecting vessel and this liquid flow rate is controlled by a control device having input means for prescriptions.

EP 2 628 421 B1 describes a device for preparing a milk-containing beverage capable of detecting the lack of milk in the milk and a corresponding procedure. It is also conceivable to design the device according to the invention for preparing beverages containing milk other than coffee or coffees.

Accordingly, there is a need for an improved apparatus that can both texture and dispense milk.

### SUMMARY OF THE INVENTION

According to the invention there is provided a milk texturing and dispensing assembly including:
a milk inlet arrangement for receiving milk from a milk st
a milk pump in fluid communication with the milk inlet arrangement and arranged to progress milk from the milk inlet arrangement to an outlet in fluid communication with the heater for dispensing milk into a container;
a controllable milk line cleaning water source;
a controller operationally connected to the-milk pump, and controllable milk line cleaning water source;
wherein the controller is configured to operate the milk pump and thence subsequently operate the controllable milk line cleaning water source to clean one or more conduits between the milk store and the outlet.

In a further aspect there is provided a milk texturing and dispensing assembly including:
a milk inlet arrangement for receiving milk from a milk store;
a heater for heating the milk;
a milk pump in fluid communication with the milk inlet arrangement and the heater and arranged to progress milk from the milk inlet arrangement through the heater;
an outlet in fluid communication with the heater for dispensing milk into a container;
container sensors configured to sense one or more predetermined qualities of the container; and
a controller operationally connected to the heater, milk pump, and container sensors;
wherein the controller is responsive to the container sensors to implement control of the heater and the milk pump depending on the one or more qualities of the container.

In a further aspect there is provided a milk texturing and dispensing assembly including:
a milk inlet arrangement for receiving milk from a milk store;
a heater for heating the milk;
a milk pump in fluid communication with the milk store and the heater and arranged to progress milk from the milk inlet arrangement through the heater;
an outlet in fluid communication with the heater for dispensing milk into a container;
a controllable milk line cleaning water source;
a controller operationally connected to the heater, milk pump, and controllable milk line cleaning water source;
wherein the controller is configured to operate the milk pump and the heater and thence subsequently operate the controllable milk line cleaning water source to clean one or more conduits between the milk store and the outlet.

**In** another aspect there is provided a milk texturing and dispensing assembly including:
a milk inlet arrangement for receiving milk from a milk store;
a heater for heating the milk;
a milk pump in fluid communication with the milk inlet arrangement and the heater and arranged to progress milk from the milk store through the heater;
an outlet in fluid communication with the heater for dispensing milk into a container;
a drain and a source of rinse water for rinsing the container; and
a controller operationally connected to the heater and the milk pump,;
wherein the controller is configured to operate the milk pump and the heater wherein the source of rinse water is operable to rinse the container.

**In** a further aspect there is provided a milk texturing and dispensing assembly comprising:
a milk pump in fluid communication with a milk inlet arrangement and an outlet for dispensing milk into a container, the milk pump being arranged to progress milk from the milk inlet arrangement to the outlet;
an aeration assembly to introduce air into the milk, wherein the aeration assembly is coupled to a controller for control thereby;
a first flow meter arranged to sense a first milk volume per unit of time upstream of the aeration assembly and a second flow meter arranged to sense a second milk volume per unit of time downstream of the aeration assembly; and
wherein the controller is configured to operate the aeration assembly taking into account the first milk volume per unit of time and the second milk volume per unit of time.

**In** an embodiment the aeration assembly includes a controllable air source for introducing air into a conduit along which the milk progresses and a controllable restriction valve for restricting passage of the milk through the conduit.

**In** an embodiment the controller is configured to operate the controllable air source and/or the controllable restriction valve, taking into account the first milk volume per unit of time and the second milk volume per unit of time.

**In** an embodiment the controller is configured to determine an increase in volume of the milk due to aeration of the milk by the controllable air source as a ratio of the second milk volume per unit of time to the first milk volume per unit of time whereby the controller operates the milk pump to dispense a volume of milk corresponding to a volume of the container.

**In** an embodiment the milk texturing and dispensing assembly includes a milk store, wherein the milk inlet arrangement is configured to couple to each of a number of milk vessels of the milk store for containing one or more different types of milk.

**In** an embodiment wherein the milk inlet arrangement includes a number of milk vessel valves wherein each milk vessel valve is connectable to a respective one of the milk vessels.

**In** an embodiment passage of milk from each of the milk vessels is controlled by a respective one of the milk vessel valves under control of the controller.

**In** an embodiment an outlet side of each of the milk vessel valves is in fluid communication with the milk pump.

**In** an embodiment the milk inlet arrangement includes a manifold, wherein the outlet side of each milk vessel valve is in fluid communication with the milk pump via the manifold.

**In** an embodiment the milk texturing and dispensing assembly includes a first flow detector arranged to detect flow of milk from the manifold wherein the controller is responsive to the first flow detector.

**In** an embodiment the first flow detector comprises a portion of the milk inlet arrangement.

**In** an embodiment the milk inlet arrangement is locatable within a refrigeration unit wherein the milk store is located within the refrigeration unit.

**In** an embodiment an outlet side of the controllable air source is coupled to the conduit along which the milk progresses via a non-return valve.

**In** an embodiment the milk texturing and dispensing assembly includes a heater for heating milk.

**In** an embodiment the heater is in parallel with a bypass conduit.

**In** an embodiment the milk texturing and dispensing assembly includes a first controllable selector for selecting between passage of milk through the heater or through the bypass conduit the first controllable selector being coupled to the controller for control thereby.

In an embodiment the milk texturing and dispensing assembly includes a second flow detector that is coupled to an outlet side of the heater wherein the controller is responsive to the second flow detector.

In an embodiment the milk texturing and dispensing assembly includes a first temperature probe wherein the first temperature probe is arranged to sense temperature of milk from the heater.

In an embodiment the milk texturing and dispensing assembly includes a second temperature probe that is arranged to sense temperature about the milk inlet arrangement.

In an embodiment the milk texturing and dispensing assembly includes a second controllable selector configured to switch passage of milk between the outlet and a drain.

In an embodiment the milk inlet arrangement includes a plurality of milk valves for selectively placing a manifold of the milk inlet arrangement in fluid communication with milk vessels of the milk store.

In an embodiment the milk texturing and dispensing assembly includes a controllable milk line cleaning water source;
the controller being operationally connected to the milk pump, and to the controllable milk line cleaning water source; and
wherein the controller is configured to operate the milk pump and operate the controllable milk line cleaning water source to clean one or more conduits between the milk store and the outlet.

In an embodiment the controllable milk line cleaning water source comprises a portion of the milk inlet arrangement.

According to the invention, the controllable milk line cleaning water source comprises an outlet fluidly connected to the manifold and an inlet connectable to a water supply, whereby the controller is configured to operate the controllable milk line cleaning water source to direct water from the water supply into the manifold.

According to the invention, the controller is configured to operate the controllable milk line cleaning source to direct water from the water supply through a conduit of the milk inlet arrangement to thereby clean the conduit of the milk inlet arrangement.

According to the invention, the conduit of the milk inlet arrangement comprises a milk line for coupling to a milk vessel of the milk store.

According to the invention, the milk inlet arrangement includes a first at least one clean line sensor for sensing a presence of milk or water in a conduit between the milk store and the outlet that dispensers milk into a container.

According to the invention, the first at least one clean line sensor comprises an optical sensor.

According to the invention, the controller is configured to operate the controllable milk line cleaning water source to clean the one or more conduits between the milk store and the outlet until the first at least one clean line sensor indicates that the one or more conduits are cleaned of milk.

In an embodiment the milk texturing and dispensing assembly includes a controllable selector having an inlet port and a first outlet port connected to the outlet for dispensing the milk into the container and a second outlet port coupled to a drain wherein the controllable selector is under control of the controller.

In an embodiment a second at least one clean line sensor is provided for sensing a presence of milk or water in a conduit coupled to the inlet port.

In an embodiment the second at least one clean line sensor comprises an optical sensor.

In an embodiment the controller is configured to operate the controllable selector to divert the inlet port to the second outlet port coupled to the drain for cleaning the conduit.

In an embodiment the controller is configured to operate the controllable milk line cleaning water source to flush water through the conduit whilst the controllable selector diverts the inlet port to the second outlet port coupled to the drain.

In an embodiment the controller is configured to respond to the second at least one clean line sensor wherein the controller operates the controllable milk line cleaning water source whilst the controllable selector diverts the inlet port to the second outlet port at least until the second at least one clean line sensor indicates that the conduit is clean.

In an embodiment the milk texturing and dispensing assembly includes container sensors configured to sense one or more qualities of the container and a heater for heating the milk.

In an embodiment the controller is operationally connected to the container sensors and is responsive thereto to implement particular control of the heater and the milk pump depending on the one or more qualities of the container.

In an embodiment the milk texturing and dispensing assembly includes a drain and a source of rinse water for rinsing the container.

In an embodiment the milk texturing and dispensing assembly includes a heater for heating the milk progressing from the milk inlet arrangement to the outlet;
wherein the controller is configured to operate the milk pump and the heater.

In an embodiment the milk texturing and dispensing assembly includes container sensors configured to sense one or more predetermined qualities of the container; and
wherein the controller is responsive to the container sensors and is configured to implement control of the heater and the milk pump depending on the one or more qualities of the container.

In an embodiment the container sensors include at least two height sensors for sensing a height of the container wherein the height of the container comprises one of the one or more qualities of the container.

In an embodiment the one or more container sensors include a color sensor for sensing a color of the container wherein the color of the container comprises one of the one or more qualities of the container.

In an embodiment the milk texturing and dispensing assembly includes a jug proximity sensor wherein the controller is responsive to the jug proximity sensor and configured to determine that the container is sufficiently close to the one or more container sensors for sensing the one or more predetermined qualities of the container.

In an embodiment the controller is operationally connected to the container sensors and is responsive thereto to implement control of the heater and the milk pump depending on the one or more qualities of the container.

In a further aspect of the present invention there is provided a method for texturing and dispensing milk comprising the steps of:
sensing one or more qualities of a container for milk;
preparing a textured milk based on a combination of the one or more qualities of the container; and
dispensing the textured milk into the container.

In another aspect of the present invention there is provided an assembly for texturing and dispensing milk comprising:
a sensing assembly for sensing one or more qualities of a container for milk; and
one or more components for texturing milk based on a combination of the one or more qualities of the container.

In a further aspect there is provided a method for texturing and dispensing milk comprising:
progressing milk from a milk inlet arrangement to an outlet;
operating an aeration assembly to introduce air into the milk;
sensing a first milk volume per unit of time upstream of the aeration assembly and a a second milk volume per unit of time downstream of the aeration assembly; and
operating the aeration assembly taking into account the first milk volume per unit of time and the second milk volume per unit of time to attain a desired milk texture.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:
Figure 1 depicts a milk texturing and dispensing assembly according to an embodiment of the present invention and shown in use with regard to a refrigeration unit containing a milk store.
Figure 2 is a hydraulic diagram of the milk texturing and dispensing assembly.
Figure 3 is an electrical diagram of the milk texturing and dispensing assembly.
Figure 4 shows a milk unit of the milk texturing and dispensing assembly with a container in the form of a jug inverted thereon for rinsing.
Figures 5 to 11 comprise flowcharts of procedures implemented by a controller of the milk texturing and dispensing assembly.
Figure 12 is a hydraulic diagram of a further embodiment of a milk texturing and dispensing assembly.
Figure 13 is an electrical diagram of the further embodiment of the milk texturing and dispensing assembly.

### DETAILED DESCRIPTION OF PREFERRED EMBODIMENTS

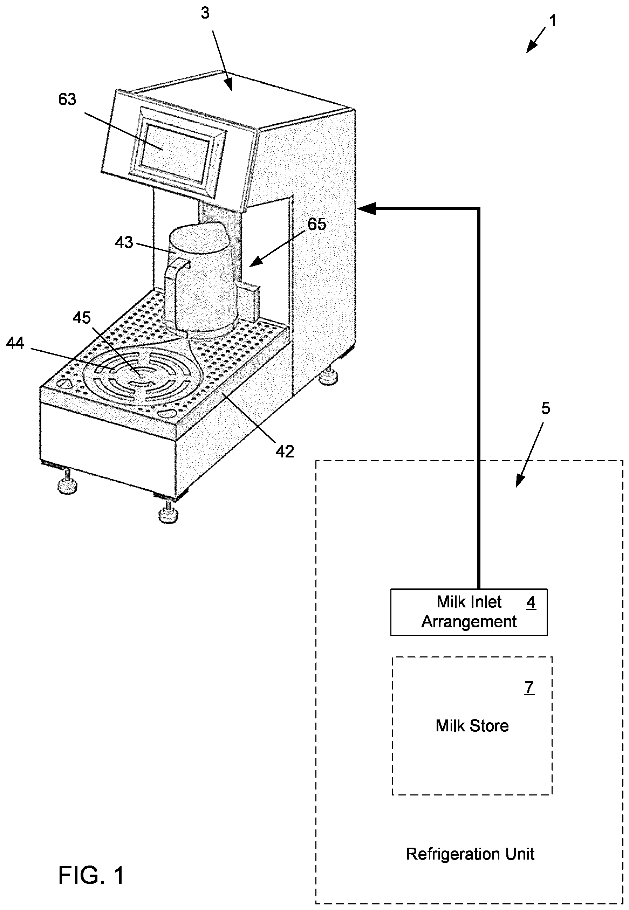

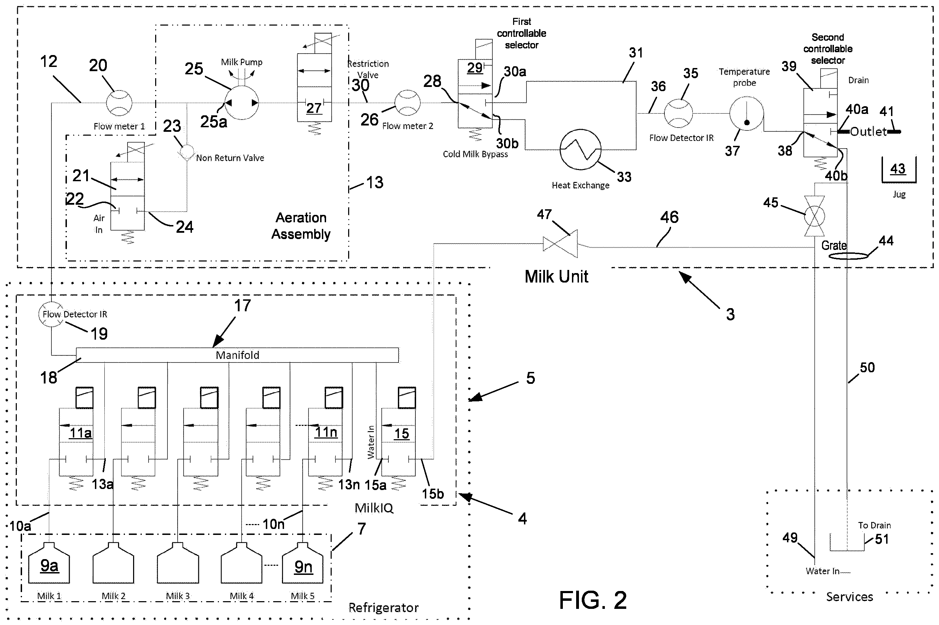

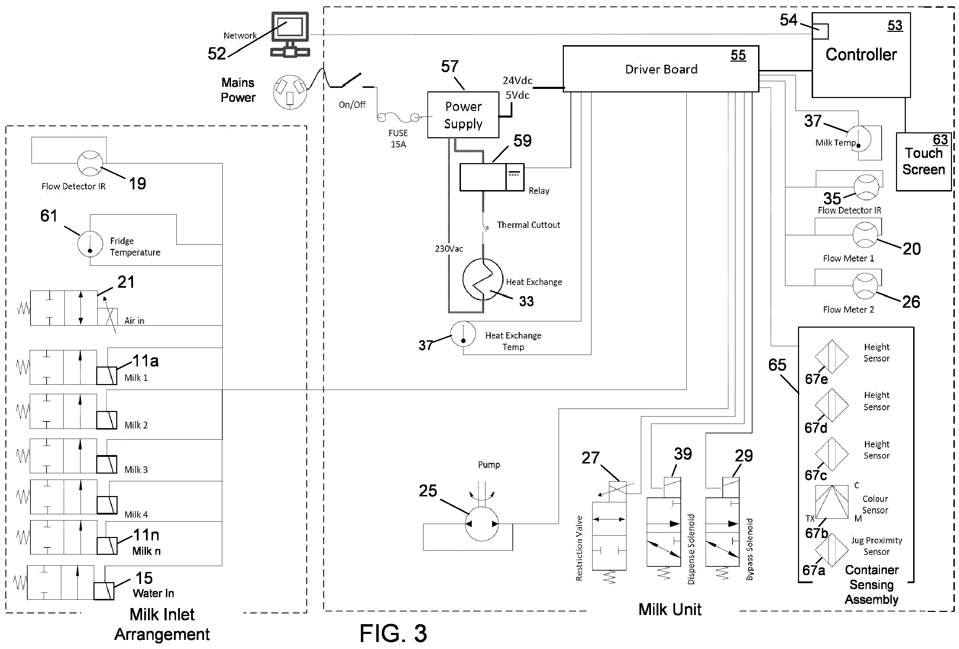

Figure 1 depicts a milk texturing and dispensing assembly 1. Figure 2 is a hydraulic schematic of the milk texturing and dispensing assembly 1 whereas Figure 3 is a corresponding electrical schematic.

The milk texturing and dispensing assembly 1 includes a milk unit 3, which is typically mounted on a counter of a hospitality venue such as a cafe or restaurant. As will be discussed the milk texturing and dispensing assembly 1 also includes a milk inlet arrangement 4 which can be coupled to a milk store, such as a number of milk vessels. For example, the milk inlet arrangement 4 may include a number of detachable connectors for connecting to the milk vessels which may be bladders, plastic milk bottles or milk cartons such as tetra packs. In use the milk inlet arrangement 4 and the milk store 7 are located in a refrigeration unit 5, which may be mounted under the counter and which cools the milk store 7. The temperature in the refrigeration unit 5 is monitored by a temperature sensor 61 (Figure 3) that is incorporated into the milk inlet arrangement 4 and which is monitored by controller 53 (Figure 2). It will be realized that the milk unit 3 may be mounted on a suitable surface other than a counter and the refrigeration unit 5 may be mounted above, or to the side of the milk unit.

Milk unit 3 includes a touchscreen 63 for users to select milk texturing options and for displaying status messages and confirming user selections. The milk unit 3 also includes a platform 42 for supporting a milk container such as jug 43. A container sensing assembly 65 (which is sometimes referred to as a "jug detection unit" or "jug sensing assembly" herein) is provided which includes a number of container sensors 67a,..,67e (Figure 3) for sensing one or more qualities of the jug 43 including its height and color and its proximity beneath a outlet 41 (Figure 2) of the milk unit 3. The container sensors are coupled to a controller 53 of the milk unit 3 so that the controller 53 is able to monitor the sensors to ascertain height and color of the jug and that it is placed under the outlet 41.

Platform 42 is formed with a grate 44 that is coupled to a drain 51 (Figure 2) and a source of rinse water for rinsing the container in the form of a tap 45 about which there is a grate 44. The tap 45 is activated by manually pressing down on the grate 44. Consequently, by inverting the jug 43 and placing it over the source of rinse water in the form of tap 45 and pressing down on the grate 44, a jet of water can be caused to issue from the tap 45 into the jug to clean it. The water deflected from the inside of the inverted jug then falls through grate 44 and thence passes along drainage line 50 (Figure 2) to drain 51.

Controller 53 is configured, so that depending on the color and height of the jug, which is sensed by container sensing assembly 65, that is placed on the platform 42 under the outlet 41, it selects one of a number of specifications for texturing the milk. For example and in order to provide a brief overview of the operation of the milk texturing and dispensing assembly 1, if the jug 43 is either a first height or a second height but not a third height and the jug is of a particular color, such as yellow, then the controller 53 will reference a specification, which may be stored in onboard memory or retrieved from a source across a data network 52 (Figure 3), corresponding to that combination of qualities and accordingly select a particular one of the milks in the milk store and heat it to a certain temperature and texturize it in a particular fashion. Accordingly, the controller 53 is configured, for example by a program stored in onboard firmware, to recognize that a particular jug is of a certain volume and is to be filled with milk that is conditioned for making a particular type of drink.

The milk texturing and dispensing assembly 1 includes a milk inlet arrangement 4 (best seen in Figure 2) which configured to be connected to one or more milk vessels that comprise the milk store 7, and which store one or more types of milk. In the presently described embodiment the milk store 7 comprises a number of vessels 9a,...,9n for storing milk. Each vessel may contain the same type of milk or the milk contained may differ from vessel to vessel. For example, one or more vessels may contain full cream milk whereas another one or more vessel may contain reduced fat milk and another one or more vessel may contain almond milk, oat milk or some other type of milk.

Milk inlet arrangement 4 includes a number of milk vessel valves 11a,...,11n and each milk vessel valve 11a,...,11n is connectable to a respective one of the milk vessels 9a,...,9n by suitable tubing. **The** milk vessel valves 11 are each controllable by the controller 53 (Figure 3), as will be discussed further, for selecting milk from one or more of the milk vessels 9a,...,9n.

An outlet side 13a,...,13n of each milk vessel valve 11a,...,11n is connected to a manifold 17.

**The** terms "outlet side" and "inlet side" are used herein to indicate ports or conduits through which fluid flows out of or into the component that is being referred to.

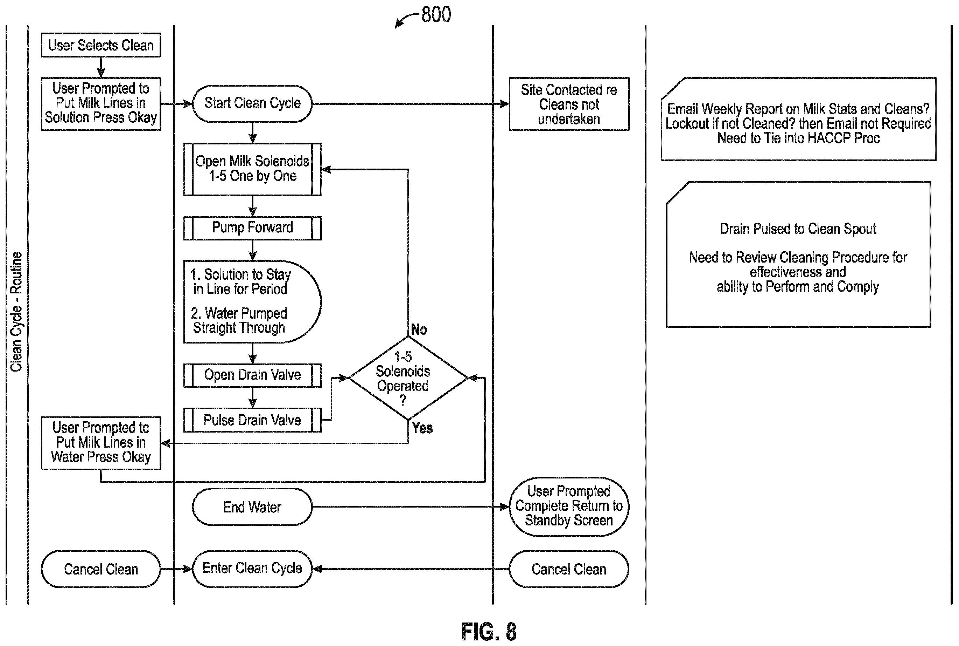

A controllable milk line cleaning water source 15 is also provided which has an outlet side 15a that is also connected to the manifold 17 and which is also under control of the controller 53. As will be discussed, the controllable milk line cleaning water source 15 can be activated by the controller 53 for the purpose of cleaning conduits and passages, e.g. tubing, along which the milk flows from the vessels 9a,...,9b to the outlet 41. For example, Figure 8 includes a flowchart of a sequence of steps implemented by controller 53 to clean milk lines, (i.e. conduits 10a to 10n) by directing water from controllable milk line cleaning water source 15 through each of the milk vessel solenoids 9a to 9n, one by one.

An outlet side 18 of the manifold 17 is in fluid communication, for example by suitable tubing, with a milk pump 25 located in the milk unit 3, via a flow detector 19 and a first flow meter 20. The first flow meter 20 generates a signal that controller 53 is configured to monitor and which indicates rate of flow of fluid from the manifold 17 to the milk pump 25. Similarly, the flow detector 19 is an optical sensor which determines opacity of fluid in the line and thus generates a signal indicating if milk is present in the line, which controller 53 is configured to monitor.

The milk vessel valves 11a,...,11n are each remotely operable by controller 53 by virtue of them including solenoids (or other electrical actuators) that are arranged to open respective internal closures, i.e. fluid valves, of each milk vessel valve. The internal closures are biased to close upon the solenoid being de-energized. One example of such a food-grade, solenoid operated valve, that is suitable for implementing the milk vessel valves 11a,, 11n is the SV0021 valve offered by Custom Valves on their webpage:
https://www.customvalves.de/products/food-grade-valves/ (retrieved on 23 February 2022).

Each milk vessel valve 11a,..., 11n is controlled by controller 53 (Figure 3) via a driver board 55. The driver board 55 is typically implemented using switching MOSFETs that switch a DC power rail of the power supply 57 across the solenoid of a respective milk vessel valve 11a,..., 11n. Each MOSFET has a gate, a drain and a source. The gate has a very high input impedance and is responsive to low voltage switching signals from the controller 53. Upon a gate having a suitable switching voltage applied thereto, a resistance between the source and the drain of the MOSFET falls to a fraction of an ohm, so that current from the DC power line flows through the respective solenoid to thereby cause it to become energized and overcome the biasing of the internal closure so that the internal closure opens. MOSFET driver circuits for energizing solenoids are well known. For example, the IRL540N MOSFET is one example of a MOSFET that may be used although other MOSFETs and indeed other types of transistor and even relays may be used to implement the driver board 55. In the presently described embodiment the power rail that operates the solenoids is at +24v DC but other voltages may also be used depending on the force needed to open the closure and the specification of the solenoids being used.

An aeration assembly 13 is provided that includes a controllable air source 21, milk pump 25 and controllable restriction valve 27. Controllable air source 21 comprises an air inlet side 22 and an air outlet side 24 with a closure therebetween that may be opened by a solenoid of the controllable air source. The controllable air source 21 operates under control of the controller 53 and is coupled to an inlet side 25a of the milk pump 25 via a non-return valve 23 which prevents fluid from flowing in to the air outlet side 24 of the controllable air source 21 and potentially damaging it. It will be realized that in some embodiments the non-return valve 23 may not be required, for example where the controllable air source 21 is mounted above the milk pump or where a small positive air pressure is maintained at the air outlet side 24.

The milk pump 25 is in fluid communication with a controllable restriction valve 27 by means of suitable tubing and so in use the milk pump 25 forces milk, mixed with some air, into the controllable restriction valve 27.

Operation of controllable restriction valve 27 is controlled by controller 53. The controllable restriction valve 27 operates to cause "slip" in the milk pump 25 which results in whipping of the milk and air that enters the pump. For example, the controller 53 may apply a pulse width modulated signal to the driver board 55 in order to effectively cause variable operation of the solenoid of the controllable restriction valve 27 to thereby vary the amount of slip of the milk pump 25. The combination of variable air, variable pump speed and variable slip enables controller 53 to achieve various, user selected, texturing of the milk and air mixture that leaves the milk pump 25. In other, less preferred embodiments the restriction valve may not be present and instead a fixed restrictor may be there instead which has a set air inlet orifice size to cause a fixed amount of slip so that variation in texturing is achieved by operation of the controllable air source and variation of the pump speed by controller 53.

Milk, that has been textured and aerated, passes from the controllable restriction valve 27 through a second flow meter 26 (monitored by controller 53) to a first controllable selector 29 which is under control of controller 53 and which includes a solenoid actuated fluid switch for switching between input port 28 to either first outlet port 30a or second outlet port 30b. The first outlet port 30a is coupled to a second controllable selector 39 via a flow detector 35 and temperature probe 37, both of which are electrically coupled to the controller 53 so that the controller 53 is able to monitor flow rate and temperature of the milk that enters the second controllable selector 39.

The second outlet port 30b of the first controllable selector is coupled to a heater in the form of a heat exchanger 33 for heating the milk as it flows therethrough and thence via the flow detector 35 and temperature probe 37 to inlet port 38 of the second controllable selector 39.

The second controllable selector 39 has a first outlet port 40a, for dispensing the milk to a container, such as jug 43 and a second outlet port 40b for connection to a drain 51. The second controllable selector 39 includes a solenoid that is controllable by the controller 53 via the driver board 55 for switching fluid progressing from the inlet port 38 to either the first outlet port 40a or the second outlet port 40b. When switched to the first outlet port 40a, milk that has been heated and textured flows through outlet 41 into a container, such as a jug 43. When switched to the second outlet port 40b milk, or rinse water, flows to drain 51.

The tubes and various components that have been described, from the manifold 17 to the outlet 41 comprise a passage for the milk that needs to be regularly cleaned. Bearing that in mind a water line 46a is provided that is coupled to mains water inlet 49. The water line 46a is connected to a pressure reduction valve 47 which is coupled to an inlet side 15b of the controllable milk line cleaning water source 15.

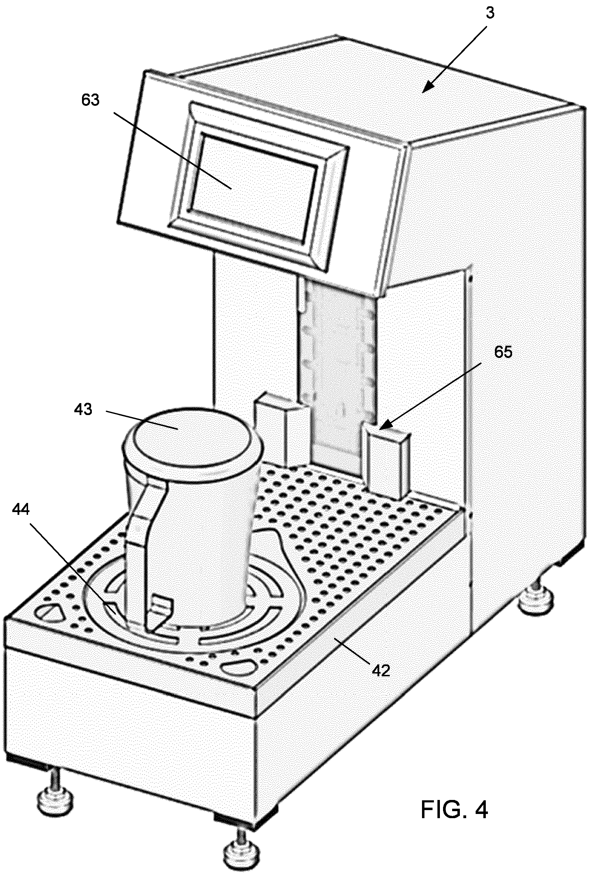

It is also advantageous that the jug can be conveniently rinsed and so the mains water inlet 49 is also coupled to a source of rinse water in the form of tap 45 which, as previously discussed, is a manually operated tap that a user can operate to produce a jet of water that issues upwardly from the platform for cleaning the inside of the jug 43 when inverted over the jet as shown in Figure 4. Wastewater from the jet then flows through grate 44 and thence out through the drain 51.

Controller 53 includes a communications port 54 so that it is able to establish communications, for example via a wired local area network, WIFI and/or *Bluetooth* with a data network 52. For example the controller 53 may establish communications with data network 52 for the purpose of receiving firmware updates and milk texturising specifications for particular combinations of the predetermined container qualities, such as jug height and color.

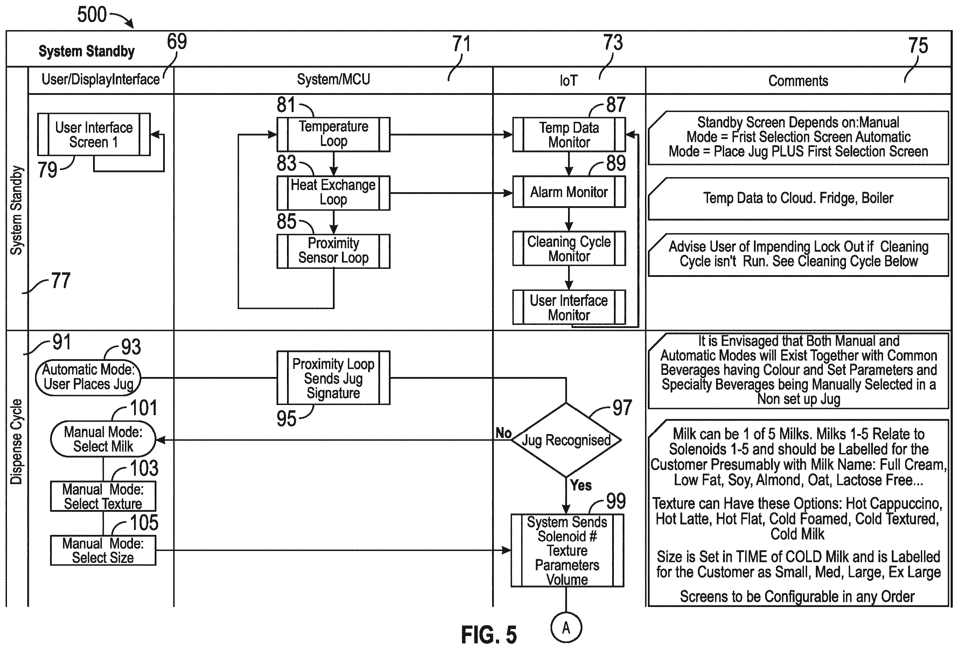

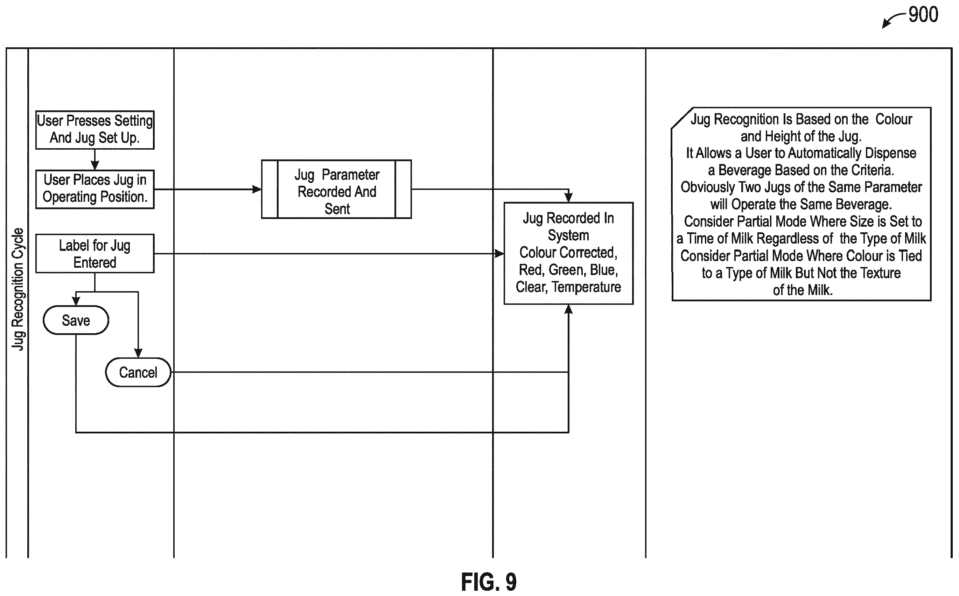

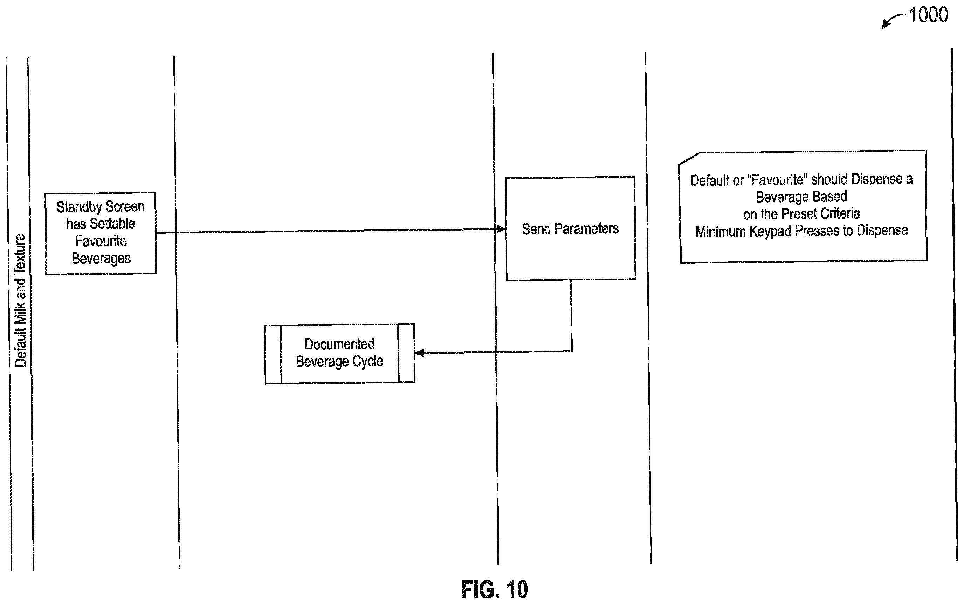

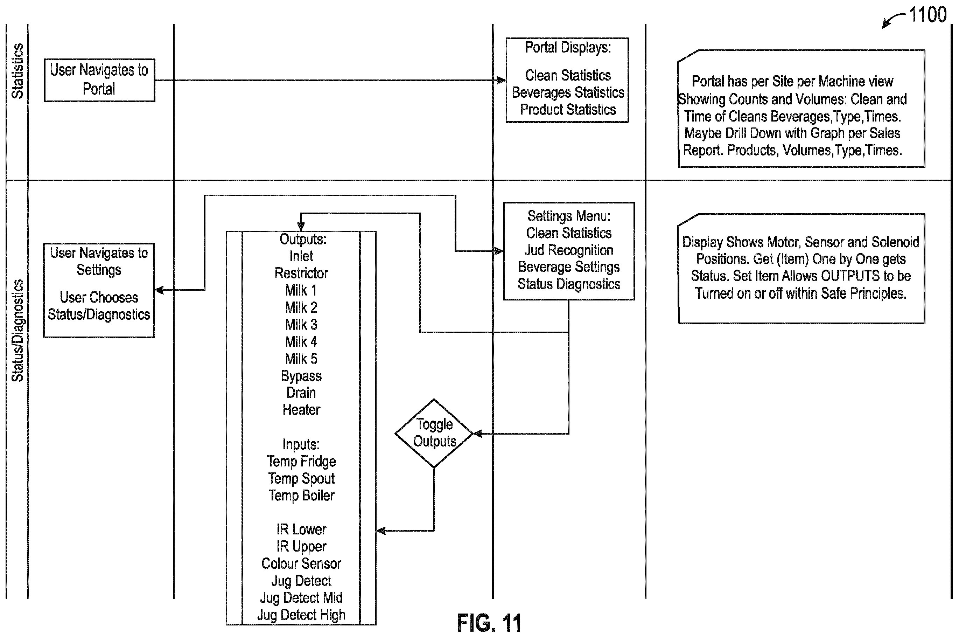

Figures 5 to 11 comprise flowcharts 500, 600,... ,1100 illustrating procedures that the controller 53 is configured, by firmware, to implement. In the leftmost column 69, titled "User/Display Interface" in Figure 5 there are a set out procedural flowcharts by which the controller 53 operates the touchscreen 63. In the next column 71, titled "System/MCU" there are set out flowcharts of procedures that the controller 53 implements to monitor and operate the various sensors and actuators, such as valves, motor and heater, of the milk texturing and dispensing assembly 1. In the next column 73 titled "IoT" there are set out flowcharts of procedures that the controller 53 implements to send and receive data across the data network 52. Column 75 "Comments" sets out comments in relation to the procedural steps that are set out in the adjacent flowchart portions.

For example, during system standby mode 77, as indicated by flowchart box 79, controller 53 presents a first user interface screen on touchscreen 63, which may for example be a screen inviting the user to make a manual selection of the type of milk, size of serving and texture that the user desires. In another operating thread, indicated by flowchart boxes 81, 83, 85, during system standby the controller 53 monitors the temperature sensor 61 (to ascertain the temperature in the milk store), heat exchange temperature sensor in the form of temperature probe 37 and proximity sensor 67a. Controller 53 transmits data collected in flowchart boxes 81, 83 via communications port 54 to the data network 52 for remote monitoring as indicated by boxes 87 and 89.

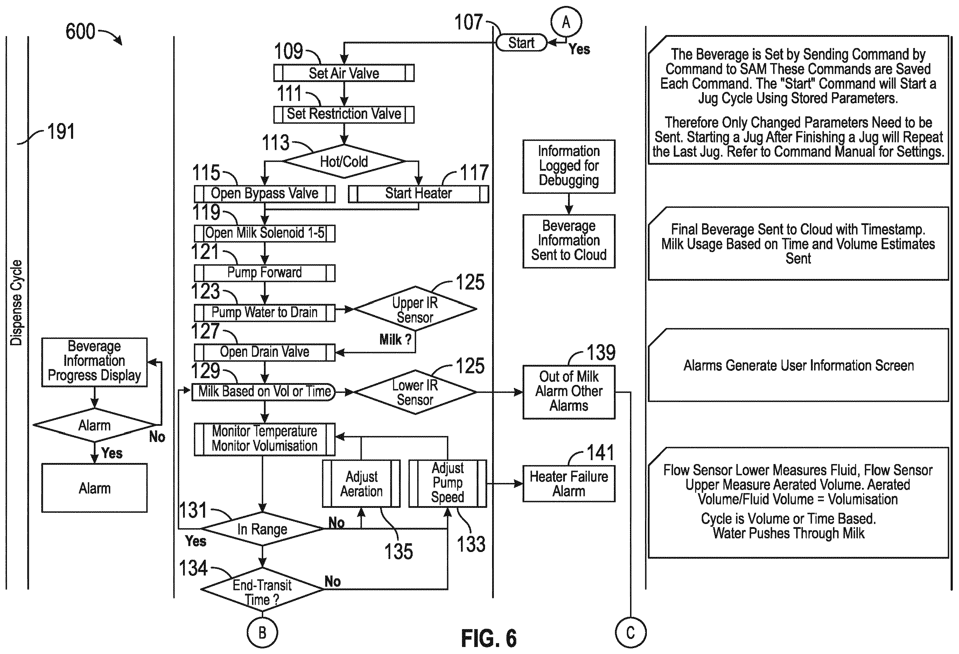

During the dispense cycle 91 (Figure 5 and Figure 6) the controller 53 operates in either an automatic mode, initiated at box 93 or a manual mode, initiated at box 101. The automatic mode is initiated when the controller 53, by monitoring proximity sensor 67a, senses that a container, e.g. a jug 43, has been placed under the dispensing outlet 41. At box 95, the controller 53 uses sensor data from colour sensor 67b and height sensors 67c, 67b, 67b to determine colour and height qualities of the jug. At box 97 the controller checks if the colour and height qualities that were determined at box 95 correspond to a prestored combination of qualities, if that is the case then the jug is deemed to be "recognised" and the controller retrieves solenoid and texture parameters that correspond to the jug that has been recognised and also the volume of the jug. For example, the height and colour of the jug may correspond to solenoid and texture parameters for making 250ml of milk that suits the creation of a Cappuccino coffee. If at box 97 the jug is not automatically recognised, then control diverts to box 101 for manual input.

At boxes 101 to 105, a user operates the touchscreen 63 to manually input milk selection, milk texture selection and size, i.e. volume, of textured milk to be dispensed.

At box 99, the controller 53 compiles information for making textured milk as specified either automatically via boxes 93 to 97 or manually via boxes 101 to 105.

The controller then operates one or more of the various milk vessel valves 11a,..11n, milk pump 25, controllable restriction valve 27, controllable air source 21, first controllable selector 29, heat exchanger 33, and second controllable selector 39 etc, whilst monitoring the various temperature and flow sensors, as indicated through boxes 107 to 137 (Figure 6) in order to dispense the specified volume of specified textured milk.

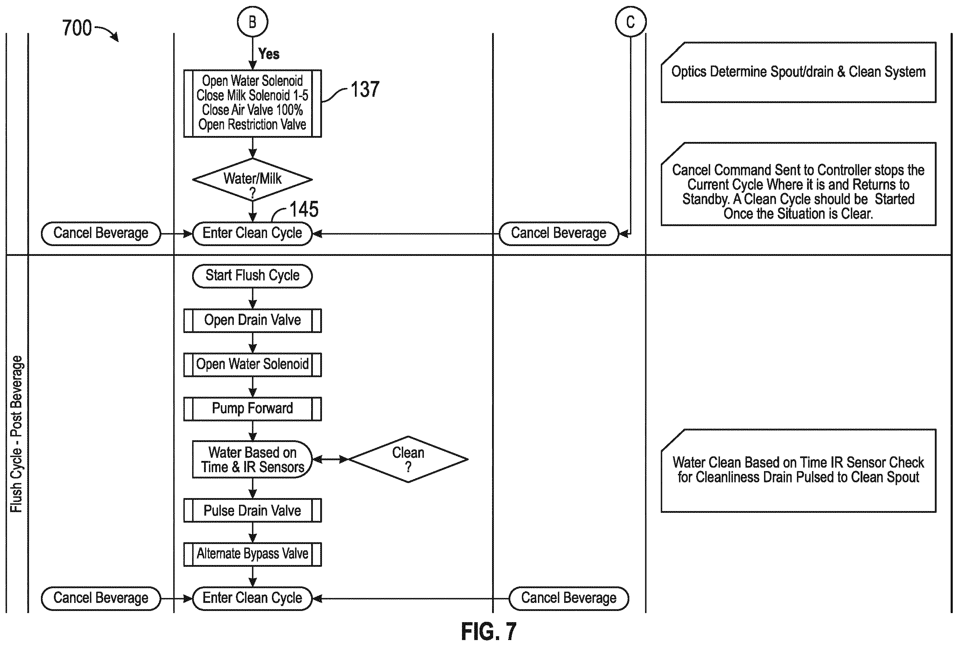

Various other operational cycles are documented in the remaining flowchart Figures 7 to 11 including line cleaning and container cleaning cycles, a set up cycle and a status/diagnostic cycle. The various features and combination of features illustrated therein comprise additional aspects and embodiments.

It will therefore be realised that in one aspect there is provided a milk texturing and dispensing assembly 1, which includes a milk pump 25 that is in fluid communication with a milk inlet arrangement 4 and also with an outlet 41 for dispensing milk into a container such as a jug 43. The milk pump 25 has inlet and outlet ports that are respectively in fluid communication with the milk inlet arrangement, for example with manifold 17, and the outlet 41 via various components and tubing that are shown in Figure 2. The milk texturing and dispensing assembly includes an aeration assembly 13 to introduce air into the milk the aeration assembly is coupled to the controller 53 for control thereby. For example, the aeration assembly 13 includes a controllable air source 21 and also a controllable restriction valve 27. Either or both of the controllable air source 21 and the controllable restriction valve 27 may be controlled by the controller 53 for the purpose of varying aeration of the milk that passes through the aeration assembly 13. The milk texturing and dispensing assembly 1 also includes a first flow meter 20 (or as sometimes referred to "lower flow meter") which is located in a conduit 12 of the assembly prior to the aeration assembly 13 and thus which is upstream of the aeration assembly 13. The first flow meter 20 is configured to sense a first milk volume per unit of time through the conduit 12 upstream of the aeration assembly 13. The milk texturing and dispensing assembly 1 also includes a second flow meter 26 that is arranged to sense a second milk volume per unit of time through conduit 30, downstream of the aeration assembly 13.

The controller 53 is configured to operate the aeration assembly 13 taking into account a signal from the first flow meter 20 indicating the first milk volume per unit of time through conduit 12 and a signal from the second flow meter 26 indicating the second milk volume per unit of time through conduit 30.

The controller 53 is configured to operate the controllable air source 21 of the aeration assembly 13 and/or the controllable restriction valve 27, taking into account the first milk volume per unit of time and the second milk volume per unit of time as sensed by the first flow meters 20 and the second flow meter 26.

The controller may be configured to determine an increase in volume of the milk due to aeration of the milk as a ratio of the second milk volume per unit of time to the first milk volume per unit of time. Consequently, the controller 53 is able to operate the milk pump 25 to dispense a volume of milk from the outlet 41 corresponding to a volume of the container, e.g. jug 43 so that the jug can be accurately filled.

As previously mentioned, in one aspect there is provided a milk texturing and dispensing assembly 1 that includes a controllable milk line cleaning water source 15 in the form of solenoid actuated water valve, which is provided in the presently described embodiments as part of the milk inlet arrangement 4 but which can also be provided outside of the milk inlet arrangement 4. The controller 53 may be configured to operate the milk pump 25, for example to dispense milk through the outlet 41, and then to operate the controllable milk line cleaning water source 15 to clean one or more conduits between the milk store 7 and the outlet 41.

The milk inlet arrangement 4 is suitable for placement inside a refrigeration unit and it includes a first at least one clean line sensor in the form of flow detector 19 for sensing the presence of milk or water in a conduit, such as conduit 12, between the milk store 7 and the outlet 41. The flow detector 19 is preferably an optical sensor such as an infra-red flow detector.

Controller 53 is configured to operate the controllable milk line cleaning water source 15 to clean the one or more conduits between the milk store 7 and the outlet 41 at least until the flow detector 19 indicates that the conduits are cleaned of milk.

As previously discussed, the milk texturing and dispensing assembly 1 of the preferred embodiment that has been described, in one aspect includes a second controllable selector 39 having an inlet port 38 and a first outlet port 40a connected to the outlet 41 for dispensing the milk into a jug 43 and a second outlet port 40b coupled to the drain 51. The second controllable selector 39, which is preferably solenoid actuated, is under control of the controller 53.

A second at least one clean line sensor in the form of an optical sensor being an infra-red flow detector 35 is provided for sensing the presence of milk or water in a conduit 36 coupled to the inlet port.

The controller 53 is configured to operate the second controllable selector 39 to divert the inlet port 38 to the second outlet port 40b, which coupled to the drain 51 for the purpose of cleaning the conduits.

The controller 53 is configured to operate the controllable milk line cleaning water source 15 to flush water through the conduits whilst the second controllable selector 39 diverts the inlet port 38 to the second outlet port 40b that is coupled to the drain 51.

Furthermore, the controller is configured to respond to the second at least one clean line sensor wherein the controller operates the controllable water source whilst the controllable selector diverts the inlet port to the second outlet port at least until the second at least one clean line sensor indicates that the conduits are clean.

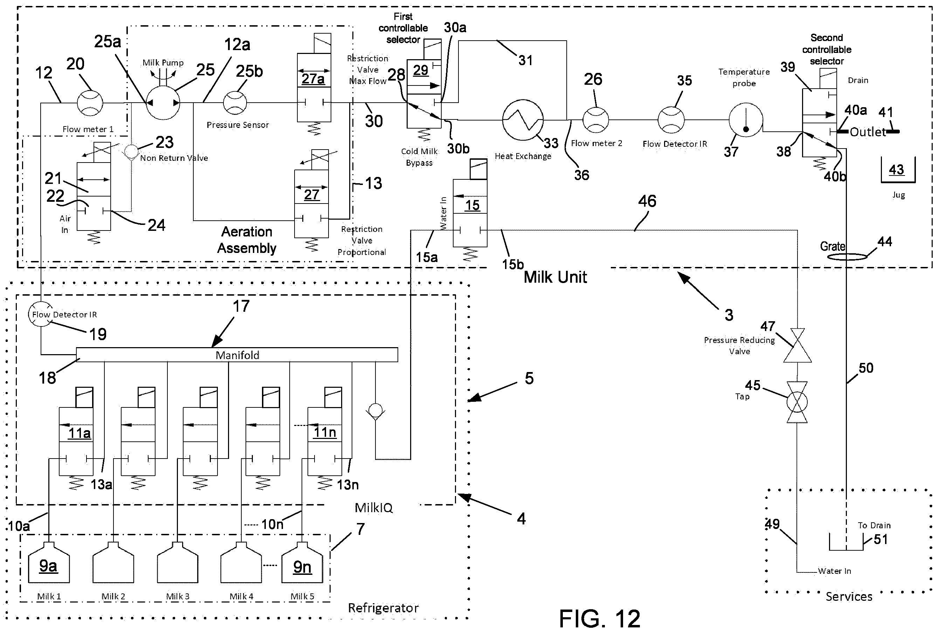

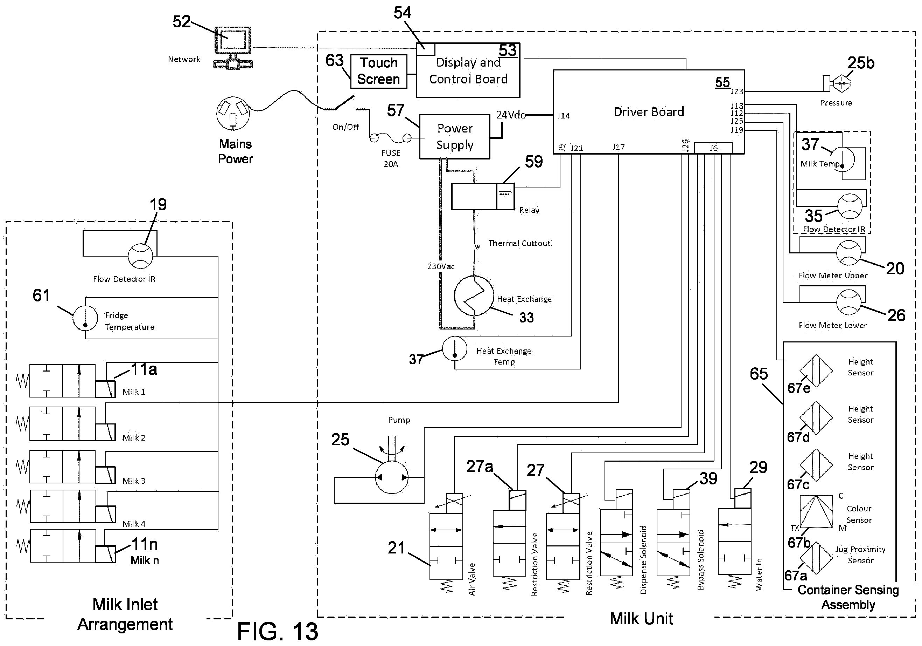

Other embodiments and variations are possible and will be apparent to those skilled in the art. For example, Figures 12 and 13 are diagrams of a further embodiment corresponding to those of Figures 2 and 3 but including a pressure sensor 25b for monitoring fluid pressure in the line 12a from milk pump 25.

The pressure sensor 25b allows the controller to monitor for more information about texture

A bypass valve 27a is included in the embodiment of Figure 12 so that the controller can operate bypass valve 27a in the event that fluids need to pass through without restriction.

The temperature probe 37 has been moved closer to the heat exchanger 33 to improve heat control relative to the embodiment of Figures 2 and 3.

In compliance with the statute, the invention has been described in language more or less specific to structural or methodical features. The term "comprises" and its variations, such as "comprising" and "comprised of" is used throughout in an inclusive sense and not to the exclusion of any additional features. It is to be understood that the invention is not limited to specific features shown or described since the means herein described comprises preferred forms of putting the invention into effect. The invention is, therefore, claimed in any of its forms or modifications within the proper scope of the appended claims appropriately interpreted by those skilled in the art. Throughout the specification and claims (if present), unless the context requires otherwise, the term "substantially" or "about" will be understood to not be limited to the value for the range qualified by the terms.

Any embodiment of the invention is meant to be illustrative only and is not meant to be limiting to the invention. Therefore, it should be appreciated that various other changes and modifications can be made as long as they fall within the scope of the appended claims.

## Claims

1. A milk texturing and dispensing assembly (1) including:
a milk inlet arrangement (4) for receiving milk from a milk store;
a heater for heating the milk;
a milk pump (25) in fluid communication with the milk inlet arrangement (4) and arranged to progress milk from the milk inlet arrangement (4) to an outlet (41) in fluid communication with the heater for dispensing milk into a container;
a controllable milk line cleaning water source (15);
a controller (53) operationally connected to the-milk pump (25), and controllable milk line cleaning water source (15);
wherein the controller (53) is configured to operate the milk pump (25) and thence subsequently operate the controllable milk line cleaning water source (15) to clean one or more conduits between the milk store and the outlet (41), whereby
the controllable milk line cleaning water source (15) comprises a portion of the milk inlet arrangement (15);
the controller (53) is configured to operate the controllable milk line cleaning water source (15) to direct water from the water supply through a conduit of the milk inlet arrangement (4) of the one or more conduits to thereby clean the conduit of the milk inlet arrangement (4);
the conduit of the milk inlet arrangement (4) comprises a milk line for coupling to a milk vessel of the milk store; and,
wherein:
the controllable milk line cleaning water source (15) comprises an outlet fluidly connected to a manifold and an inlet connectable to a water supply, whereby the controller (53) is configured to operate the controllable milk line cleaning water source (15) to direct water from the water supply into the manifold (17); the milk texturing and dispensing assembly being **characterised in that**
the milk inlet arrangement (4) includes a first at least one clean line sensor arranged to sense a presence of milk or water in a conduit of the one or more conduits between the milk store and the outlet (41) that dispensers milk into a container, wherein the at least one clean line sensor comprises an optical sensor; and,
the controller (53) is configured to operate the controllable milk line cleaning water source (15) to clean the one or more conduits between the milk store and the outlet until the first at least one clean line sensor indicates that the one or more conduits are cleaned of milk.

2. The milk texturing and dispensing assembly (1) of claim 1, wherein:
the milk pump (25) is in fluid communication with the milk store and the heater and arranged to progress milk from the milk inlet arrangement (4) through the heater;
the controller (53) is operationally connected to the heater, milk pump (25), and controllable milk line cleaning water source (15); and
the controller (53) is configured to operate the milk pump (25) and the heater and thence subsequently operate the controllable milk line cleaning water source (15) to clean one or more conduits between the milk store and the outlet (53).

3. The milk texturing and dispensing assembly (1) of claim 1, including:
a drain (51) and a source of rinse water for rinsing the container;
wherein:
the milk pump (25) is in fluid communication with the milk inlet arrangement (4) and the heater and arranged to progress milk from the milk store through the heater; and
the controller (53) is operationally connected to the heater and the milk pump (25) and is configured to operate the milk pump (25) and the heater wherein the source of rinse water is operable to rinse the container.

4. The milk texturing and dispensing assembly (1) of any one of claims 1 to 3, including an aeration assembly (13) to introduce air into the milk, wherein the aeration assembly (13) is coupled to the controller (53) for control thereby, wherein the aeration assembly (13) includes:
a controllable air source (21) for introducing air into the one more conduits along which the milk progresses;
a controllable restriction valve (27) for restricting passage of the milk through the one or more conduits;
the milk texturing and dispensing assembly (1) includes:
a first flow meter (20) arranged to sense a first milk volume per unit of time upstream of the aeration assembly (13); and
a second flow meter (26) arranged to sense a second milk volume per unit of time downstream of the aeration assembly (13);
wherein the controller (53) is configured to operate the controllable air source (21) and/or the controllable restriction valve (27), taking into account a first milk volume per unit of time and a second milk volume per unit of time.

5. The milk texturing and dispensing assembly (1) of claim 4, wherein the controller (53) is configured to determine an increase in volume of the milk due to aeration of the milk by the controllable air source (21) as a ratio of the second milk volume per unit of time to the first milk volume per unit of time whereby the controller (53) operates the milk pump (25) to dispense a volume of milk corresponding to a volume of the container.

6. The milk texturing and dispensing assembly (1) of any one of claims 1 to 5,
wherein the milk inlet arrangement (4) is configured to couple to each of a number of milk vessels of the milk store for containing one or more different types of milk; and
wherein the milk inlet arrangement (4) includes a number of milk vessel valves wherein each milk vessel valve being connectable to a respective one of the milk vessels.

7. The milk texturing and dispensing assembly (1) of claim 6, wherein passage of milk from each of the milk vessels is controlled by a respective one of the milk vessel valves under control of the controller (53).

8. The milk texturing and dispensing assembly (1) of claim 6 or claim 7, including
a bypass conduit in parallel with the heater; and
a first controllable selector (29) for selecting between passage of milk through the heater or through the bypass conduit the first controllable selector (29) being coupled to the controller (53) for control thereby.

9. The milk texturing and dispensing assembly (1) of claim 8, including a second controllable selector (39) configured to switch passage of milk between the outlet (41) and a drain (51).

10. The milk texturing and dispensing assembly (1) of claim 2 or claim 3, including
one or more container sensors (67a, 67b, 67c, 67d, 67e) configured to sense one or more qualities of the container; and
wherein the controller (53) is operationally connected to the container sensors (67a, 67b, 67c, 67d, 67e) and is responsive thereto to implement control of the heater and the milk pump (25) depending on the one or more qualities of the container.

11. The milk texturing and dispensing assembly (1) of claim 10, wherein the container sensors (67a, 67b, 67c, 67d, 67e) include a color sensor (67b) for sensing a color of the container and at least two height sensors (67c) for sensing a height of the container; and/or including a container proximity sensor wherein the controller is responsive to the container proximity sensor (67a) and configured to determine that the container is sufficiently close to the one or more container sensors (67a, 67b, 67c, 67d, 67e) for sensing the one or more qualities of the container.

## Patentansprüche

1. Anordnung (1) zum Texturieren und Ausgeben von Milch, einschließend:
eine Milcheinlassanordnung (4) zum Empfangen von Milch aus einem Milchspeicher;
eine Heizvorrichtung zum Erhitzen der Milch;
eine Milchpumpe (25) in Fluidkommunikation mit der Milcheinlassanordnung (4) und angeordnet, um Milch von der Milcheinlassanordnung (4) zu einem Auslass (41) in Fluidkommunikation mit der Heizvorrichtung zu befördern, um Milch in einen Behälter auszugeben;
eine steuerbare Milchleitungsreinigungswasserquelle (15);
eine Steuereinrichtung (53), die betriebsmäßig mit der Milchpumpe (25) und der steuerbaren Milchleitungsreinigungswasserquelle (15) verbunden ist;
wobei die Steuereinrichtung (53) ausgebildet ist, um die Milchpumpe (25) zu betreiben und von dort aus anschließend die steuerbare Milchleitungsreinigungswasserquelle (15) zu betreiben, um eine oder mehrere Leitungen zwischen dem Milchspeicher und dem Auslass (41) zu reinigen;
wobei:
die steuerbare Milchleitungsreinigungswasserquelle (15) einen Abschnitt der Milcheinlassanordnung (15) umfasst;
die Steuereinrichtung (53) ausgebildet ist, um die steuerbare Milchleitungsreinigungswasserquelle (15) zu betreiben, um Wasser aus der Wasserversorgung durch eine Leitung der Milcheinlassanordnung (4) der einen oder mehreren Leitungen zu leiten, um dadurch die Leitung der Milcheinlassanordnung (4) zu reinigen;
die Leitung der Milcheinlassanordnung (4) eine Milchleitung zum Koppeln an einen Milchbehälter des Milchspeichers umfasst;
und wobei:
die steuerbare Milchleitungsreinigungswasserquelle (15) einen mit einem Verteiler fluidisch verbundenen Auslass und einen mit einer Wasserversorgung verbindbaren Einlass umfasst, wobei die Steuereinrichtung (53) ausgebildet ist, um die steuerbare Milchleitungsreinigungswasserquelle (15) zu betreiben, um Wasser aus der Wasserversorgung in den Verteiler (17) zu leiten;
wobei die Anordnung zum Texturieren und Ausgeben von Milch **dadurch gekennzeichnet ist, dass**:
die Milcheinlassanordnung (4) einen ersten mindestens einen Reinleitungssensor einschließt, der angeordnet ist, um ein Vorhandensein von Milch oder Wasser in einer Leitung der einen oder mehreren Leitungen zwischen dem Milchspeicher und dem Auslass (41) zu erfassen, der Milch in einen Behälter ausgibt, wobei der mindestens eine Reinleitungssensor einen optischen Sensor umfasst;
und
die Steuereinrichtung (53) ausgebildet ist, um die steuerbare Milchleitungsreinigungswasserquelle (15) zu betreiben, um die eine oder mehreren Leitungen zwischen dem Milchspeicher und dem Auslass zu reinigen, bis der erste mindestens eine Reinleitungssensor angibt, dass die eine oder mehreren Leitungen von Milch gereinigt sind.

2. Anordnung (1) zum Texturieren und Ausgeben von Milch nach Anspruch 1, wobei:
die Milchpumpe (25) in Fluidkommunikation mit dem Milchspeicher und der Heizvorrichtung ist und angeordnet ist, um Milch von der Milcheinlassanordnung (4) durch die Heizvorrichtung zu befördern;
die Steuereinrichtung (53) betriebsmäßig mit der Heizvorrichtung, der Milchpumpe (25) und der steuerbaren Milchleitungsreinigungswasserquelle (15) verbunden ist;
und
die Steuereinrichtung (53) ausgebildet ist, um die Milchpumpe (25) und die Heizvorrichtung zu betreiben und von dort aus anschließend die steuerbare Milchleitungsreinigungswasserquelle (15) zu betreiben, um eine oder mehrere Leitungen zwischen dem Milchspeicher und dem Auslass (53) zu reinigen.

3. Anordnung (1) zum Texturieren und Ausgeben von Milch nach Anspruch 1, einschließend:
einen Abfluss (51) und eine Quelle von Spülwasser zum Spülen des Behälters;
wobei:
die Milchpumpe (25) in Fluidkommunikation mit der Milcheinlassanordnung (4) und der Heizvorrichtung ist und angeordnet ist, um Milch aus dem Milchspeicher durch die Heizvorrichtung zu befördern;
und
die Steuereinrichtung (53) betriebsmäßig mit der Heizvorrichtung und der Milchpumpe (25) verbunden ist und ausgebildet ist, um die Milchpumpe (25) und die Heizvorrichtung zu betreiben, wobei die Quelle von Spülwasser betreibbar ist, um den Behälter zu spülen.

4. Anordnung (1) zum Texturieren und Ausgeben von Milch nach einem der Ansprüche 1 bis 3, einschließend eine Belüftungsanordnung (13) zum Einleiten von Luft in die Milch, wobei die Belüftungsanordnung (13) mit der Steuereinrichtung (53) zur Steuerung dadurch gekoppelt ist, wobei die Belüftungsanordnung (13) Folgendes einschließt:
eine steuerbare Luftquelle (21) zum Einleiten von Luft in die eine oder mehrere Leitungen, entlang derer die Milch befördert wird;
ein steuerbares Drosselventil (27) zum Einschränken eines Durchgangs der Milch durch die eine oder die mehreren Leitungen;
wobei die Anordnung (1) zum Texturieren und Ausgeben von Milch Folgendes einschließt:
einen ersten Durchflussmesser (20), der angeordnet ist, um stromaufwärts der Belüftungsanordnung (13) ein erstes Milchvolumen pro Zeiteinheit zu erfassen;
und
einen zweiten Durchflussmesser (26), der angeordnet ist, um stromabwärts der Belüftungsanordnung (13) ein zweites Milchvolumen pro Zeiteinheit zu erfassen;
wobei die Steuereinrichtung (53) ausgebildet ist, um die steuerbare Luftquelle (21) und/oder das steuerbare Drosselventil (27) unter Berücksichtigung eines ersten Milchvolumens pro Zeiteinheit und eines zweiten Milchvolumens pro Zeiteinheit zu betreiben.

5. Anordnung (1) zum Texturieren und Ausgeben von Milch nach Anspruch 4, wobei die Steuereinrichtung (53) ausgebildet ist, um eine Zunahme des Milchvolumens aufgrund der Belüftung der Milch durch die steuerbare Luftquelle (21) als ein Verhältnis des zweiten Milchvolumens pro Zeiteinheit zu dem ersten Milchvolumen pro Zeiteinheit zu bestimmen, wodurch die Steuereinrichtung (53) die Milchpumpe (25) betreibt, um ein Milchvolumen auszugeben, das einem Volumen des Behälters entspricht.

6. Anordnung (1) zum Texturieren und Ausgeben von Milch nach einem der Ansprüche 1 bis 5,
wobei die Milcheinlassanordnung (4) ausgebildet ist, um mit jedem einer Anzahl von Milchbehältern des Milchspeichers zu koppeln, um einen oder mehrere Milchsorten zu enthalten;
und
wobei die Milcheinlassanordnung (4) eine Anzahl von Milchbehälterventilen einschließt, wobei jedes Milchbehälterventil mit einem jeweiligen der Milchbehälter verbindbar ist.

7. Anordnung (1) zum Texturieren und Ausgeben von Milch nach Anspruch 6, wobei der Durchgang von Milch aus jedem der Milchbehälter durch ein jeweiliges der Milchbehälterventile unter Steuerung der Steuereinrichtung (53) gesteuert wird.

8. Anordnung (1) zum Texturieren und Ausgeben von Milch nach Anspruch 6 oder Anspruch 7, einschließend:
eine Bypass-Leitung parallel zur Heizvorrichtung;
und
einen ersten steuerbaren Selektor (29) zum Auswählen zwischen dem Durchgang von Milch durch die Heizeinrichtung oder durch die Bypass-Leitung, wobei der erste steuerbare Selektor (29) mit der Steuereinrichtung (53) zum Steuern dadurch gekoppelt ist.

9. Anordnung (1) zum Texturieren und Ausgeben von Milch nach Anspruch 8, einschließend einen zweiten steuerbaren Selektor (39), der ausgebildet ist, um den Durchgang der Milch zwischen dem Auslass (41) und einem Abfluss (51) umzuschalten.

10. Anordnung (1) zum Texturieren und Ausgeben von Milch nach Anspruch 2 oder Anspruch 3, einschließend:
einen oder mehrere Behältersensoren (67a, 67b, 67c, 67d, 67e), die ausgebildet sind, um eine oder mehrere Eigenschaften des Behälters zu erfassen;
und
wobei die Steuereinrichtung (53) betriebsmäßig mit den Behältersensoren (67a, 67b, 67c, 67d, 67e) verbunden ist und darauf anspricht, um die Steuerung der Heizvorrichtung und der Milchpumpe (25) zu implementieren, abhängig von der einen oder mehreren Eigenschaften des Behälters.

11. Anordnung (1) zum Texturieren und Ausgeben von Milch nach Anspruch 10, wobei die Behältersensoren (67a, 67b, 67c, 67d, 67e) einen Farbsensor (67b) zum Erfassen einer Farbe des Behälters und mindestens zwei Höhensensoren (67c) zum Erfassen einer Höhe des Behälters einschließen;
und/oder einen Sensor zur Bestimmung der Lage des Behälters einschließt, wobei die Steuereinrichtung auf den Sensor zur Lage des Behälters (67a) anspricht und ausgebildet ist, um zu bestimmen, dass sich der Behälter ausreichend nahe an dem einen oder den mehreren Behältersensoren (67a, 67b, 67c, 67d, 67e) befindet, um die eine oder die mehreren Eigenschaften des Behälters zu erfassen.

## Revendications

1. Ensemble (1) de texturation et de distribution de lait, incluant :
un agencement (4) d'entrée de lait, pour recevoir du lait provenant d'un réservoir de lait ;
un dispositif de chauffage pour chauffer le lait ;
une pompe à lait (25) en communication fluidique avec l'agencement (4) d'entrée de lait et agencée pour faire progresser du lait depuis l'agencement (4) d'entrée de lait jusqu'à une sortie (41) en communication fluidique avec le dispositif de chauffage de manière à distribuer du lait dans un contenant ;
une source d'eau (15) de nettoyage de conduite de lait commandable ;
un dispositif de commande (53) relié de manière fonctionnelle à la pompe à lait (25) et à la source d'eau (15) de nettoyage de conduite de lait commandable ;
dans lequel le dispositif de commande (53) est configuré pour faire fonctionner la pompe à lait (25) et par conséquent faire fonctionner la source d'eau (15) de nettoyage de conduite de lait commandable de manière à nettoyer un ou plusieurs conduits entre le réservoir de lait et la sortie (41) ;
dans lequel :
la source d'eau (15) de nettoyage de conduite de lait comprend une partie de l'agencement (15) d'entrée de lait ;
le dispositif de commande (53) est configuré pour faire fonctionner la source d'eau (15) de nettoyage de conduite de lait commandable de manière à diriger de l'eau provenant de l'alimentation en eau à travers un conduit de l'agencement (4) d'entrée de lait du un ou des plusieurs conduits afin, ainsi, de nettoyer le conduit de l'agencement (4) d'entrée de lait ;
le conduit de l'agencement (4) d'entrée de lait comprend une conduite de lait destinée à être raccordée à un récipient à lait du réservoir de lait ;
et dans lequel :
la source d'eau (15) de nettoyage de conduite de lait comprend une sortie en communication fluidique avec un collecteur et une entrée pouvant être reliée à une alimentation en eau, moyennant quoi le dispositif de commande (53) est configuré pour faire fonctionner la source d'eau (15) de nettoyage de conduite de lait commandable de manière à diriger l'eau de l'alimentation en eau dans le collecteur (17) ;
et l'ensemble de texturation et de distribution de lait étant **caractérisé en ce que** :
l'agencement (4) d'entrée de lait inclut au moins un premier capteur de conduite propre agencé pour capter une présence de lait ou d'eau dans un conduit du un ou des plusieurs conduits entre le réservoir de lait et la sortie (41) qui distribue du lait dans un contenant, dans lequel le au moins un capteur de conduite propre comprend un capteur optique ;
et
le dispositif de commande (53) est configuré pour faire fonctionner la source d'eau (15) de nettoyage de conduite de lait commandable de manière à nettoyer le un ou les plusieurs conduits entre le réservoir de lait et la sortie jusqu'à ce que le premier au moins un capteur de conduite propre indique que le un ou les plusieurs conduits sont nettoyés du lait.

2. Ensemble (1) de texturation et de distribution de lait selon la revendication 1, dans lequel :
la pompe à lait (25) est en communication fluidique avec le réservoir de lait et le dispositif de chauffage et agencée pour faire progresser du lait depuis l'agencement (4) d'entrée de lait à travers le dispositif de chauffage ;
le dispositif de commande (53) est relié de manière fonctionnelle au dispositif de chauffage, à la pompe à lait (25) et à la source d'eau (15) de nettoyage de conduite de lait commandable ;
et
le dispositif de commande (53) est configuré pour faire fonctionner la pompe à lait (25) et le dispositif de chauffage et par conséquent faire fonctionner la source d'eau (15) de nettoyage de conduite de lait commandable de manière à nettoyer un ou plusieurs conduits entre le réservoir de lait et la sortie (53).

3. Ensemble (1) de texturation et de distribution de lait selon la revendication 1, incluant :
une évacuation (51) et une source d'eau de rinçage pour rincer le contenant ;
dans lequel :
la pompe à lait (25) est en communication fluidique avec l'agencement (4) d'entrée de lait et le dispositif de chauffage, et agencée pour faire progresser du lait depuis le réservoir de lait à travers le dispositif de chauffage ;
et
le dispositif de commande (53) est relié de manière fonctionnelle au dispositif de chauffage et à la pompe à lait (25) et est configuré pour faire fonctionner la pompe à lait (25) et le dispositif de chauffage dans lequel la source d'eau de rinçage peut fonctionner de manière à rincer le contenant.

4. Ensemble (1) de texturation et de distribution de lait selon l'une quelconque des revendications 1 à 3, incluant un ensemble d'aération (13) pour introduire de l'air dans le lait, dans lequel l'ensemble d'aération (13) est raccordé au dispositif de commande (53) de manière à commander ce dernier, dans lequel l'ensemble d'aération (13) inclut :
une source d'air commandable (21) pour introduire de l'air dans le un ou les plusieurs conduits le long duquel ou desquels le lait progresse ;
une vanne de restriction commandable (27) pour restreindre le passage du lait à travers le un ou les plusieurs conduits ;
l'ensemble (1) de texturation et de distribution de lait inclut :
un premier débitmètre (20) agencé pour capter un premier volume de lait par unité de temps en amont de l'ensemble d'aération (13) ;
et
un deuxième débitmètre (26) agencé pour capter un deuxième volume de lait par unité de temps en aval de l'ensemble d'aération (13) ;
dans lequel le dispositif de commande (53) est configuré pour faire fonctionner la source d'air commandable (21) et/ou la vanne de restriction commandable (27), en prenant en compte un premier volume de lait par unité de temps et un deuxième volume de lait par unité de temps.

5. Ensemble (1) de texturation et de distribution de lait selon la revendication 4, dans lequel le dispositif de commande (53) est configuré pour déterminer une augmentation du volume du lait due à une aération du lait par la source d'air commandable (21) en tant que rapport du deuxième volume de lait par unité de temps au premier volume de lait par unité de temps, moyennant quoi le dispositif de commande (53) fait fonctionner la pompe à lait (25) de manière à distribuer un volume de lait correspondant à un volume du contenant.

6. Ensemble (1) de texturation et de distribution de lait selon l'une quelconque des revendications 1 à 5,
dans lequel l'agencement (4) d'entrée de lait est configuré pour s'accoupler avec chacun d'un certain nombre de récipients à lait du réservoir de lait permettant de contenir un ou plusieurs types de lait différents ;
et
dans lequel l'agencement (4) d'entrée de lait inclut un certain nombre de vannes de récipient à lait, dans lequel chaque vanne de récipient à lait peut être raccordée à un récipient respectif des récipients à lait.

7. Ensemble (1) de texturation et de distribution de lait selon la revendication 6, dans lequel le passage de lait depuis chacun des récipients à lait est commandé par une vanne respective des vannes de récipient à lait, sous la commande du dispositif de commande (53).

8. Ensemble (1) de texturation et de distribution de lait selon la revendication 6 ou la revendication 7, incluant :
un conduit de dérivation en parallèle avec le dispositif de chauffage ;
et
un premier sélecteur commandable (29) pour choisir entre le passage de lait à travers le dispositif de chauffage ou à travers le conduit de dérivation, le premier sélecteur commandable (29) étant accouplé au dispositif de commande (53) de manière à commander ce dernier.

9. Ensemble (1) de texturation et de distribution de lait selon la revendication 8, incluant un deuxième sélecteur commandable (39) configuré pour basculer le passage de lait entre la sortie (41) et une évacuation (51).

10. Ensemble (1) de texturation et de distribution de lait selon la revendication 2 ou la revendication 3, incluant :
un ou plusieurs capteurs de contenant (67a, 67b, 67c, 67d, 67e) configurés pour capter une ou plusieurs qualités du contenant ;
et
dans lequel le dispositif de commande (53) est relié de manière fonctionnelle aux capteurs de contenant (67a, 67b, 67c, 67d, 67e) et y répond pour mettre en œuvre la commande du dispositif de chauffage et de la pompe à lait (25) en fonction de la une ou des plusieurs qualités du contenant.

11. Ensemble (1) de texturation et de distribution de lait selon la revendication 10, dans lequel les capteurs de contenant (67a, 67b, 67c, 67d, 67e) incluent un capteur de couleur (67b) pour capter une couleur du contenant et au moins deux capteurs de hauteur (67c) de manière à capter une hauteur du contenant ;
et/ou incluent un capteur de proximité de contenant dans lequel le dispositif de commande répond au capteur de proximité de contenant (67a) et configuré pour déterminer que le contenant est suffisamment proche du un ou des plusieurs capteurs de contenant (67a, 67b, 67c, 67d, 67e) de manière à capter la une ou les plusieurs qualités du contenant.
